# EUROPEAN PATENT SPECIFICATION

(11) **EP 3 857 951 B1**
(45) Date of publication and mention of the grant of the patent: **22.11.2023**
(21) Application number: 18935432.7
(22) Date of filing: 25.09.2018
(51) Int. Cl.: H04L 1/08

(54) **LOGICAL CHANNEL CELL RESTRICTION**
LOGISCHE KANALZELLENBEGRENZUNG
RESTRICTION DE CELLULE DE CANAL LOGIQUE

(43) Date of publication of application: 04.08.2021
(73) Proprietor: Nokia Technologies Oy, 02610 Espoo (FI)
(72) Inventor: WU, Chunli, Beijing 100102 (CN); TURTINEN, Samuli, 91100 Li (FI); SEBIRE, Benoist, Tokyo 106--6141 (JP)
(74) Representative: Nokia EPO representatives
(86) International application number: PCT/CN2018/107413
(87) International publication number: WO 2020/061769

(56) References cited:
- US-A1- 2016 044 507
- RAPPORTEUR (APPLE): "Summary of offline 006 - Clarification on LCH-to-cell restriction", 3GPP DRAFT; R2-1813038_SUMMARY OF OFFLINE 006_CLARIFICATION ON LCH-TO-CELL RESTRICTION, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Gothenburg, Sweden; 20180820 - 20180824 26 August 2018 (2018-08-26), XP051522611, Retrieved from the Internet: URL:http://www.3gpp.org/ftp/tsg%5Fran/WG2% 5FRL2/TSGR2%5F103/Docs/R2%2D1813038%2Ezip [retrieved on 2018-08-26]
- APPLE: "Clarification on LCH-to-cell restriction", 3GPP DRAFT; R2-1812790_CLARIFICATION ON LCH-TO-CELL RESTRICTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20180820 - 20180824 10 August 2018 (2018-08-10), XP051522382, Retrieved from the Internet: URL:http://www.3gpp.org/ftp/tsg%5Fran/WG2% 5FRL2/TSGR2%5F103/Docs/R2%2D1812790%2Ezip [retrieved on 2018-08-10]
- ERICSSON: "LCP restrictions for duplication and non-duplication", 3GPP DRAFT; R2-1810180 - LCP RESTRICTIONS FOR DUPLICATION AND NON-DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Montreal, Canada; 20180702 - 20180706 21 June 2018 (2018-06-21), XP051525982, Retrieved from the Internet: URL:http://www.3gpp.org/ftp/tsg%5Fran/WG2% 5FRL2/TSGR2%5FAHs/2018%5F07%5FNR/Docs/R2%2 D1810180%2Ezip [retrieved on 2018-06-21]
- OPPO: "CR on cell restriction in LCP for PDCP duplication", 3GPP DRAFT; 38321_CR0370_R2-1811754_CR ON CELL RESTRICTION IN LCP FOR PDCP DUPLICATION, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Gothenberg, Sweden; 20180820 - 20180824 10 August 2018 (2018-08-10), XP051521393, Retrieved from the Internet: URL:http://www.3gpp.org/ftp/tsg%5Fran/WG2% 5FRL2/TSGR2%5F103/Docs/R2%2D1811754%2Ezip [retrieved on 2018-08-10]
- LENOVO ET AL: "Cell restriction for a DRB configured for duplication", 3GPP DRAFT; R2-1812208, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20180820 - 20180824 9 August 2018 (2018-08-09), XP051521815, Retrieved from the Internet: URL:http://www.3gpp.org/ftp/tsg%5Fran/WG2% 5FRL2/TSGR2%5F103/Docs/R2%2D1812208%2Ezip [retrieved on 2018-08-09]
- APPLE: "Clarification on LCH-to-cell restriction", 3GPP TSG-RAN WG2 Meeting #103, R2-1812790, 24 August 2018 (2018-08-24), XP051522382,
- RAPPORTEUR APPLE: "Summary of offline 006 - Clarification on LCH-to-cell restriction", 3GPP TSG-RAN WG2 Meeting #103, R2-1813038, 24 August 2018 (2018-08-24), XP051522611,
- OPPO: "CR on cell restriction in LCP for PDCP duplication", 3GPP TSG-RAN WG2 Meeting #103, R2-1811754, 24 August 2018 (2018-08-24), XP051521393,
- LENOVO et al.: "Cell restriction for a DRB configured for duplication", 3GPP TSG-RAN WG2 Meeting #103, R2-1812208, 24 August 2018 (2018-08-24), XP051521815,
- HUAWEI et al.: "Further consideration on LCH-to- Cell restriction", 3GPP TSG-RAN WG2 Meeting #103, R2-1811381, 24 August 2018 (2018-08-24), XP051521037,

## Description

### TECHNICAL FIELD

The invention relates to communications.

### BACKGROUND

In a wireless network, it is possible to utilize duplication for a radio bearer which can be beneficial to enhance reliability. There seems to be room for developing the duplication procedure. Documents R2-1813038 and R2-1812790 discuss logical channel to cell -restrictions.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following some embodiments will be described with reference to the attached drawings, in which
Figure 1 illustrates an example a wireless communication system to which embodiments of the invention may be applied;
Figures 2 and 3 illustrate flow diagrams showing methods according to some embodiments, not in accordance with all aspects of the invention as defined in the independent claims;
Figures 4A and 4B illustrate some examples of the current situation regarding cell restrictions;
Figure 4C illustrates an embodiment regarding the cell restrictions applied when the duplication is deactivated, not in accordance with all aspects of the invention as defined in the independent claims;
Figure 5 illustrates a signal diagram according to an embodiment, not in accordance with all aspects of the invention as defined in the independent claims;
Figure 6 provides methods according to some embodiments, not in accordance with all aspects of the invention as defined in the independent claims;
Figure 7 illustrates a flow diagram according to some embodiments, not in accordance with all aspects of the invention as defined in the independent claims; and
Figures 8 and 9 illustrate apparatuses according to some embodiments, not in accordance with all aspects of the invention as defined in the independent claims.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different exemplifying embodiments will be described using, as an example of an access architecture to which the embodiments may be applied, a radio access architecture based on long term evolution advanced (LTE Advanced, LTE-A) or new radio (NR) (or can be referred to as 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

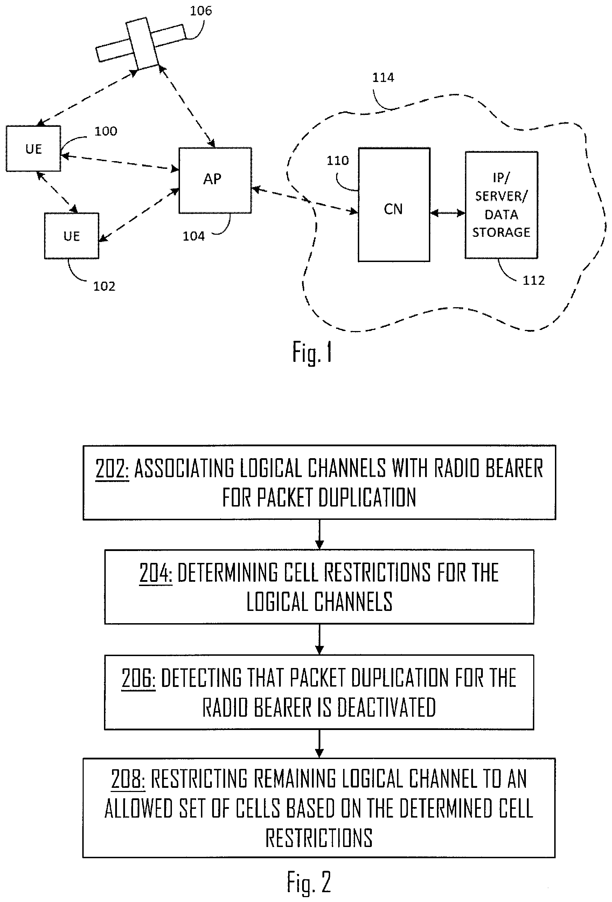

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 100 and 102 configured to be in a wireless connection on one or more communication channels in a cell with an access node 104 (such as (e/g)NodeB) providing the cell. The physical link from a user device to a (e/g)NodeB is called uplink (UL) or reverse link and the physical link from the (e/g)NodeB to the user device is called downlink or forward link. It should be appreciated that (e/g)NodeBs or their functionalities may be implemented by using any node, host, server or access point etc. entity suitable for such a usage. Said node 104 may be referred to as network node 104 or network element 104 in a broader sense.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bidirectional radio links to user devices. The antenna unit may comprise a plurality of antennas or antenna elements. The (e/g)NodeB is further connected to core network 110 (CN or next generation core NGC). Depending on the system, the counterpart on the CN side can be a user plane function (UPF) (this may be 5G gateway corresponding to serving gateway (S-GW) of 4G) or access and mobility function (AMF) (this may correspond to mobile management entity (MME) of 4G).

The user device 100, 102 (also called UE, user equipment, user terminal, terminal device, mobile termination, etc.) illustrates one type of an apparatus to which resources on the air interface are allocated and assigned, and thus any feature described herein with a user device may be implemented with a corresponding apparatus, such as a part of a relay node. An example of such a relay node is an integrated access and backhaul (IAB) -node (a.k.a. self-backhauling relay).

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device (or in some embodiments mobile terminal (MT) part of the relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices may have one or more antennas. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilise services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side and non-real time functions being carried out in a centralized manner.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

Logical Channel (LCH) to cell restriction is introduced in NR to prevent mapping of LCHs of the same radio bearer to the same cell. The radio bearer having more than one LCH may be used for duplication purposes. If the LCH would be mapped to the same cell, benefit from duplication may be very small. The duplication may also be referred to as Packet Data Convergence Protocol (PDCP) duplication or simply data packet duplication. A radio bearer may sometimes be referred to as a bearer.

One specific example of duplication is Carrier Aggregation (CA) duplication which can be understood as duplication with CA where the LCHs of a duplicated radio bearer are mapped to different serving cells or carriers with CA. Therefore, the CA duplication may refer to PDCP CA duplication or CA packet duplication.

Packet duplication may refer to duplication of control and/or user plane packets.

In an embodiment, the packet duplication refers to Protocol Data Unit (PDU) duplication.

When duplication is deactivated for a radio bearer, the cell restriction may be lifted so that the remaining LCH of the radio bearer may use any cell as in normal operation (e.g. as in normal CA operation if duplication is utilized with CA).

Another use case for the cell restrictions may be to enable means for resource isolation for different services, e.g. to enforce Maximum Data Burst Volume (MDBV).

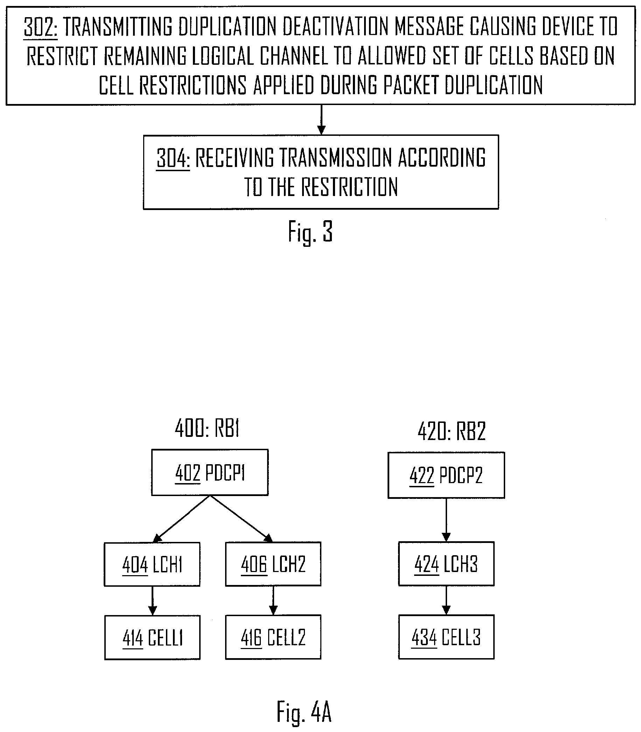

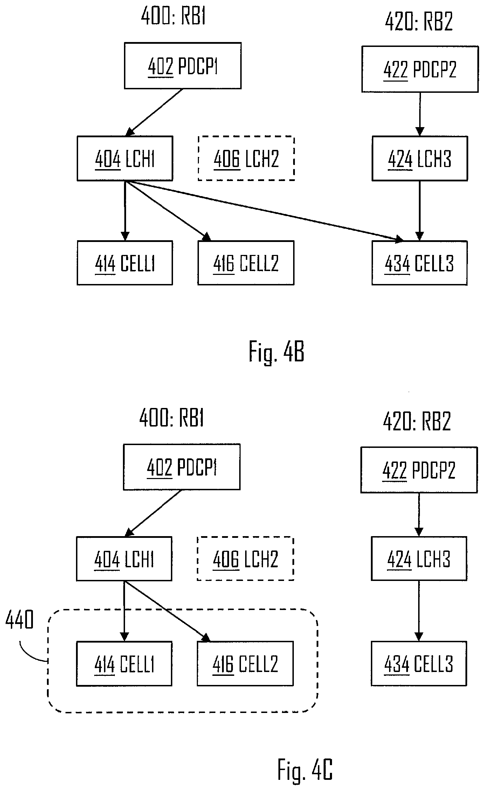

At the moment according to 3GPP standard specifications, LCH to cell restriction is only applicable when duplication is configured and activated, or when there is no duplication configured for the radio bearer. However, the cell restriction (i.e. which refers to LCH to cell restriction) may not apply when duplication is configured and deactivated. Figures 4A and 4B illustrate some example situations which may occur when cell restrictions are not applied for logical channel after duplication is deactivated. In Figures 4A to 4C, number after element name (e.g. PDCP1, PDCP2, Cell1, LCH3, etc.) is used for illustration and separation purposes. For example, PDCP 1 may be referred to as first PDCP and LCH1 may be referred to as first LCH.

Referring first to Figure 4A, radio bearer (RB) 400 may be associated with PDCP entity 402 and RB 420 with PDCP entity 422. RB 400 may be configured and activated for duplication in the example of Figure 4A. Hence, PDCP layer duplicate packets to logical channels 404 and 406. It is noted that the radio bearer 400 may have two logical channels 404, 406 active during the duplication (i.e. when duplication is active). It is possible that there are more than two active LCHs.

Based on the cell restrictions applied for the LCHs, LCH 404 is restricted to cell 414 and LCH 406 is restricted to cell 416. So, this may mean that the packet of LCH 404 is provided via cell 414 and packet of LCH 406 is provided via cell 416. The cell restrictions may define that the LCH 404 cannot use or select any other cell than cell 414. However, it is possible that the cell restrictions define a set of cells (i.e. more than two cells) which can be used by the LCH 404. In such case the LCH 404 can use or select one of the cells amongst said set of cells, for example. Similar restrictions may apply for LCH 406. However, the cell restrictions may be LCH specific meaning that each LCH may have its own allowed cell or cells. For example, the cell restrictions may define that the cell(s) used by LCHs 404, 406 are different cell(s) (as is in Figure 4A).

In the example of Figures 4A to 4C, duplication may not be configured for radio bearer 420 that is associated with PDCP 422. Hence, packets may be delivered via cell 434 utilizing LCH 424. The cell restrictions may define that LCH 424 is restricted to cell 434.

In an embodiment, the radio bearer 400, 420 (or simply bearer 400, 420) is referred to as data radio bearer (DRB) or signalling radio bearer (SRB) 400, 420.

Referring now to Figure 4B, which shows situation without the proposed solution after the duplication is deactivated, LCH 404 may remain and as the cell restrictions may be lifted- Thereafter, the LCH 404 may use or select any of the cells 414, 416, 434. As shown in the Figure, situation for LCH 424 may not change as the RB 420 was not subject to duplication in the first place. As duplication for RB 400 deactivated, LCH 406 may be inactive.

It is noted that LCH 404 may refer to primary LCH or to a LCH that is associated with a primary Radio Link Control (RLC) entity. LCH 406 may refer to secondary LCH or to a LCH that is associated with a secondary RLC entity. So, the LCH 404 that remains after the duplication deactivation may be, for example, the primary LCH 404 of the RB 400.

As indicated above, there seems to be room to provide solutions which enhance the situation with respect to cell restrictions after duplication is deactivated. Some embodiments of this solution are illustrated in Figures 2 and 3.

Referring to Figure 2, there is provided a method in a device of a wireless communication network, the method comprising: associating (block 202) plurality of logical channels with a radio bearer that is configured for packet duplication; determining (block 204) cell restrictions for the plurality of logical channels, the cell restrictions indicating allowable one or more cell for each of the plurality of logical channels during packet duplication for the radio bearer; detecting (block 206) that the packet duplication for the radio bearer is deactivated; in response to the detecting, restricting (block 208) a remaining logical channel of the plurality of logical channels to an allowed set of cells based on the determined cell restrictions for the plurality of logical channels.

Referring to Figure 3, there is provided a method in a network node of a wireless communication network, the method comprising: transmitting (block 302) a duplication deactivation message to a device of the wireless communication network, the duplication deactivation message causing the device to deactivate packet duplication for a radio bearer and to restrict a remaining logical channel of a plurality of logical channels to an allowed set of cells, wherein the allowed set of cells is based on cell restrictions indicating allowable one or more cell for each of the plurality of logical channels during packet duplication; receiving (block 304) a transmission from the device according to the restriction caused by the duplication deactivation message.

The wireless communication network discussed with respect to Figures 2 and 3 may refer to the communication network discussed with respect to system of Figure 1. For example, said network may be a cellular communication network.

The device discussed with respect to Figures 2 and 3 may refer to a terminal device or user equipment (e.g. UE 100, 102), such as an access user equipment, or possibly to a circuitry or circuitries of a terminal device or user equipment.

The network node discussed with respect to Figures 2 and 3 may refer to a network element (e.g. network element 104) comprised in a base station or gNB, or to the base station or gNB. It is possible that the network node functionalities are shared between two or more physical entities. For example, Control Unit (CU) and Distributed Unit (DU) of the gNB may be split. It is also possible that CU and DU of gNB are not split.

As indicated above, the proposed solution enables cell restriction for logical channel that remains after the duplication for a radio bearer is deactivated. Let us now look at an example embodiment of Figure 4C which shows at least some of the obtained improvements in case the duplication (i.e. which is active in Figure 4A) is deactivated. So, the duplication may be configured but may be inactive (deactivated e.g. by deactivation signalling from the network). Without introducing new information elements and/or extra signaling (i.e. less radio and/or processing resources needed) the present solution enables the LCH 404, which is the remaining LCH after the duplication is deactivated (note that it could instead be LCH 406), to use or select cells 414 and 416. The LCH 404 may be thus restricted to an allowed set of cells 440 (or set of allowed cells) including both cells 414, 416. So, cell 434, which is associated with LCH 424 and different RB 420, may be excluded from said allowed set of cells 440 for the remaining LCH. In an embodiment, the remaining LCH (in this example LCH 404) may use or select one of the cells amongst said allowed set of cells 440. So, for example, the remaining LCH may use one of the two cells 414, 416 that were used by LCHs 404, 406 during the time the duplication was active.

So, in general, the allowed cells 414, 416 for both LCHs 404, 406 of the bearer may be considered as allowed cells to be used for the remaining LCH of the bearer after the deactivation of the duplication or when the duplication is deactivated. In an embodiment, the device uses or selects one of said allowed cells to be used for the remaining LCH.

In an embodiment, the allowed set of cells 440 comprises cells 414, 416 allowed for the plurality of logical channels 404, 406 during packet duplication for the radio bearer 400. These allowed cells may be referred to as allowedServingCells, for example. Referring to Figure 4A, cell 414 is allowed for LCH 404 and cell 416 is allowed for LCH 406. Hence, both cells 414, 416 (i.e. the allowedServingCells) may be allowed for the remaining LCH after/when the duplication is deactivated. It is noted that in other words this can be expressed as allowed set of cells 440 comprises cells 414, 416 to which the LCHs 404, 406 were restricted during the duplication (i.e. as in Figure 4A). E.g. according to cell restrictions, in situation of Figure 4A, LCH 404 may be restricted to cell 414 and LCH 406 to cell 416. Hence, both may be allowed for the remaining LCH after duplication deactivation.

In an embodiment according to the invention as claimed, the allowed set of cells 440 is a union of the cells 414, 416 allowed for the plurality of logical channels 404, 406 during packet duplication for the radio bearer 400. So, the allowed set of cells 440 may consists of cells 414, 416 that were allowed (or in other words: cells 414, 416 to which the LCHs 404, 406 were restricted) when/during duplication was active.

In other words, it can be understood that cell restriction when duplication is deactivated is achieved by mapping the restrictions of both of the two LCHs 404, 406 of the same radio bearer 400 to the remaining LCH (e.g. LCH 404) of the radio bearer 400 without a need to introduce new IE. One example of this is to use union of the configured allowed cells 414,416 for the two LCHs 404, 406 of the same radio bearer 400 as allowed cells to be used for the remaining LCH of the radio bearer when duplication is deactivated. As noted, the other LCH (e.g. LCH 406) may be deactivated in response and/or after the duplication is deactivated.

Defining the allowed set of cells 440 may be acquired without new signalling or information element from the network. That is, the UE may be preconfigured to define the allowed set of cells 440 by taking a union of the cells 414, 416 allowed for the plurality of logical channels 404, 406 during packet duplication for the radio bearer 400. This avoids increase of signaling overhead. Taking a union of the cells 414, 416 allowed for the plurality of logical channels 404, 406 that were applied in relation to packet duplication for the radio bearer 400 provides an effective solution to keep LCH to cell restrictions valid also after packet duplication deactivation. Owing to the current proposal, there is no need by the network to signal/indicate any new cells or subset of cells to be included in the allowed set of cells 440.

In an embodiment, with reference to Figure 4A, each of the plurality of logical channels 404, 406 is restricted to a different cell 414, 416 (or different set of cells meaning that said sets may be different and/or comprise cells that are not comprised in the other cell) during packet duplication for the radio bearer 400. For example, first logical channel 404 may be restricted to cell 414 and second logical channel 406 to cell 416.

In an embodiment, with reference to Figure 4C, the remaining logical channel is associated with a primary radio link control (RLC) entity or is a primary logical channel. It is noted that the primary and secondary RLC entities or logical channels may relate to situation of Figure 4A. However, these same terms can be used in the situation of Figure 4C in which, according to an embodiment, the secondary logical channel or logical channel associated with the secondary RLC entity is the logical channel 406 that is at least inactive/deactivated. To be precise, logical channel 404 may be the remaining logical channel.

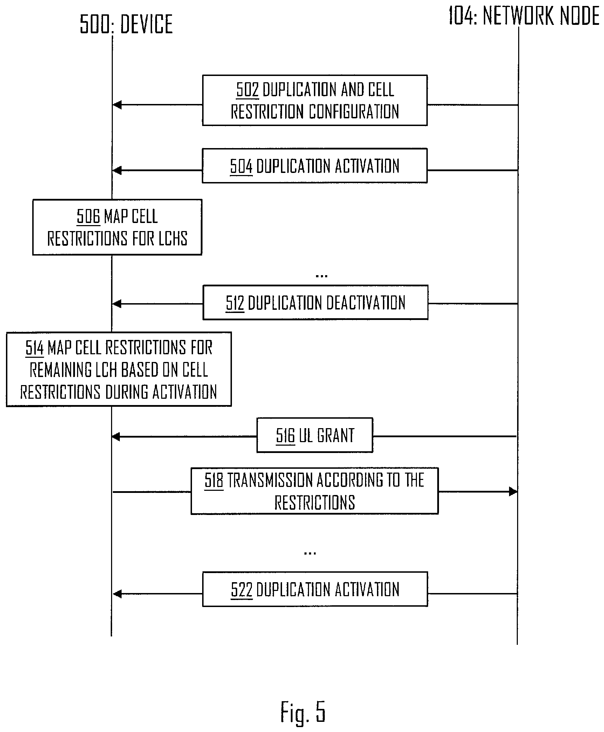

Figure 5 illustrates a signal diagram according to an embodiment. Referring to Figure 5, device 500 may refer to the device (e.g. UE 100 or 102) discussed with respect Figure 2 and 3 and network node 104 may refer to the network node discussed with respect to Figure 2 and 3.

For example, the network node 104 may transmit a duplication and cell restriction configuration message in block 502 to the device 500. The configuration message may configure (or cause the device 500 to configure) duplication and cell restrictions. The configuration message may indicate for which or what radio bearer the duplication is to be configured. In an embodiment, said message indicates cells restrictions for LCH 404 and/or LCH 406 which are applied when the duplication is active. Said message and other messages discussed herein may be Radio Resource Control (RRC) messages, for example.

In block 504, the network node 104 may transmit a duplication activation message to the device 500. In an embodiment, messages of blocks 502 and 504 are transmitted in the same message. The duplication activation message may activate packet duplication for a radio bearer (e.g. radio bearer 400). It is further noted that the duplication activation message may indicate, in an embodiment, which the radio bearer for which the duplication is to be activated.

In block 506, which may be performed in response to or after message 502 and/or 504, the device 500 may map the cell restrictions (see message 502) of the logical channels. For example the device 500, cell restrictions for LCHs 404, 406 may be mapped based on the configuration message of block 502.

Thus, the packet duplication may be activated and used (e.g. as in Figure 4A). At some point, the network node 104 may transmit a duplication deactivation message to the device 500 (block 512). For example, said message may be transmitted in response to network node 104 detecting that a predetermined condition with respect to the duplication for the radio bearer is met. Block 514 may be similar or same as block 302.

In block 514, which may be similar or same as block 208, the device 500 maps the cell restrictions (e.g. allowedServingCells which indicate allowed cells for the two logical channels used during the duplication) to the remaining logical channel.

In an embodiment, the restricting or mapping of block 514 or block 208 is initiated on the basis of the duplication deactivation message received from the network node 104 in block 512.

It is noted that the packet duplication for the bearer may also stop in response to the message of block 512.

For example, based on an uplink grant message (block 516) received by the device 500 from the network node 104 after the duplication is deactivated, the device 500 may transmit message(s) to the network node 104 according to the restrictions or mappings defined for the remaining logical channel of the radio bearer (block 518). These transmissions may include any user plane and/or control plane data generally known in the art.

In an embodiment, the network node 104 reactivates the duplication (block 522). In such case there may be no need to transmit the duplication and cell restriction configuration which was already transmitted in block 502, the device 500 may map the cell restrictions of the logical channels as in block 506. However, such message may be retransmitted, for example, if reconfiguration is needed.

As shown in Figure 5, it may suffice that the network node 104 transmits the deactivation message in block 512 which causes the deactivation of the duplication and also initiates the device 500 to use the predefined cell restrictions (i.e. obtained in block 502) for the remaining LCH. A skilled person understands, this provides benefits as there is no need to transmit another message or include a further information element to the deactivation message of block 512. The predefined cell restrictions may be based on the allowed cells for both LCHs 404, 406 during duplication, and may be mapped to the remaining LCH in block 514.

In an embodiment, the duplication is duplication with CA. In other words, the radio bearer 400 may configured for duplication with carrier aggregation. As noted above, this can be referred to as PDCP CA duplication. Hence, for example, message of block 502 may further configure CA for the device 500. It is noted that the CA may continue even if the duplication ends or is deactivated. However, in some instances the CA may also be deactivated based on the duplication deactivation message (e.g. block 512). So, generally, the radio bearer 400 may be configured for packet duplication with carrier aggregation and the duplication may be either active/activated (see e.g. Figure 4A) or inactive/deactivated (see e.g. Figure 4C).

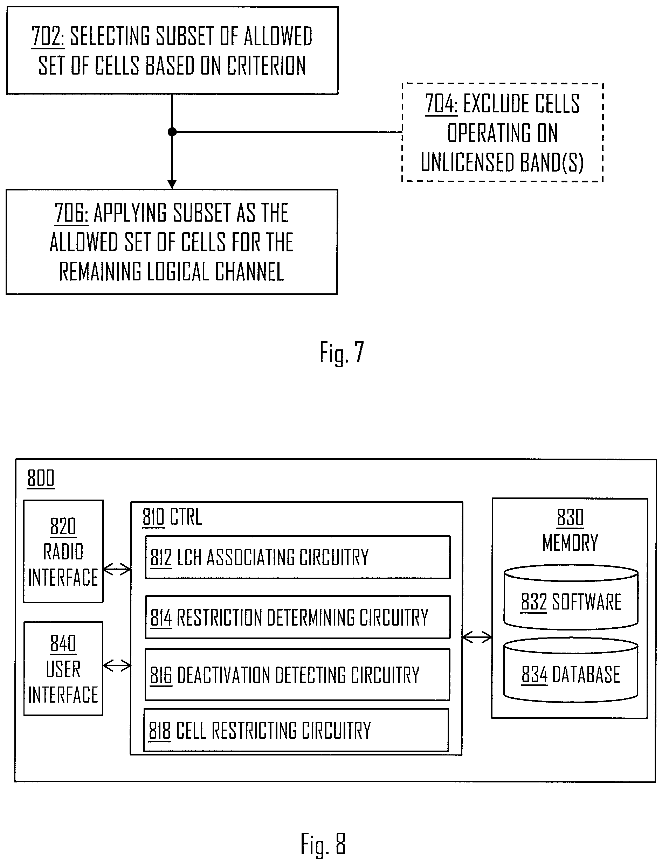

Figure 7 illustrates a flow diagram according to some embodiments. Referring to Figure 7, the provided method at the device 500 side may further comprise selecting (block 702) a subset of the allowed set of cells 440 based on at least one criterion; and applying (706) the subset as the allowed set of cells for the remaining logical channel. So, basically, it may be possible to further restrict the allowed set of cells 440 that can be used by the remaining logical channel after deactivation of the duplication. Steps 702 and 706 may be substeps of block 514, for example.

In an embodiment, the at least one criterion of block 702 causes excluding (block 704) cells operating on unlicensed bands from the subset. Therefore, the remaining logical channel after duplication deactivation cannot use cell or cells that operate on unlicensed band or bands. In some examples these cells can be referred to as unlicensed cells or unlicensed band cells.

For example, LCH 404 may be restricted to cells operating on licensed band (i.e. in other words cells that operate on unlicensed bands are excluded) in the situation of Figure 4A. So, the cells restriction during duplication being active may restrict the LCH 404 (e.g. primary LCH) to licensed cell(s). However, LCH 406 may also use unlicensed cells according to the cells restrictions. Hence, the union of cells for the remaining LCH after/when the duplication is deactivated could consider both unlicensed and licensed cells. However, if the further restriction is applied, the subset obtained in blocks 702, 704 and applied in block 706 may exclude any unlicensed cells.

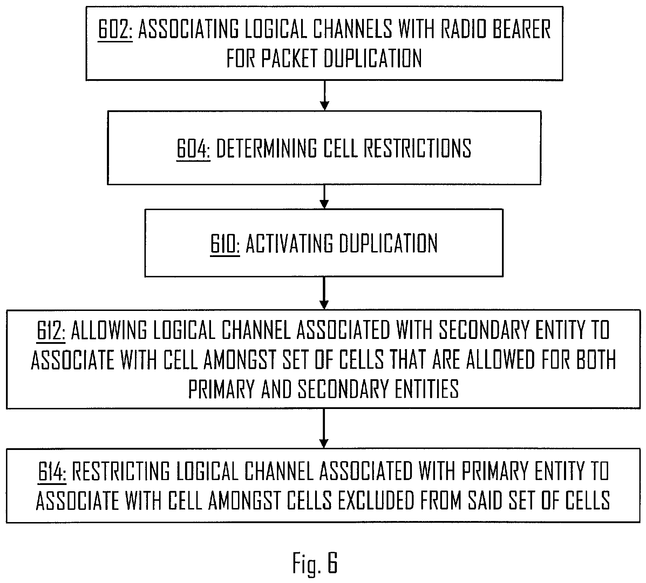

Figure 6 illustrates a flow diagram according to some embodiments. Referring to Figure 6, according to an aspect there is provided a method in a device of wireless communication network (e.g. device 500), the method comprising: upon activation of packet duplication for a radio bearer (block 610), allowing (block 612) a second logical channel to use a cell amongst a second set of cells that indicates allowed cells for the second logical channel during packet duplication for the radio bearer; and restricting (block 614) a first logical channel to use a cell amongst a subset of a first set of cells that indicates allowed cells for the first logical channel after deactivation of the duplication for the radio bearer, wherein the subset excludes cells that are included in both the first and second sets of cells.

As noted above, the first and second sets of cells may be indicated, by the network, to the device 500, for example, using a configuration message (e.g. similar or same as in block 502). So, the network may indicate the second set of cells for the second LCH to be used when the duplication is active, and the first set of cells for the first LCH to be used when the duplication is inactive (e.g. after duplication is deactivated). The subset of cells for the first LCH may exclude all cells that are comprised in both the first and second sets of cells. Therefore, during duplication for the radio bearer, cells usable by the second LCH may not be usable by the first LCH. Skilled person understands that the indicated first and second set of cells may be applied by the device 500 accordingly. I.e. after deactivation of the duplication, the device 500 may cause the first LCH (i.e. the remaining LCH) to use a cell amongst the first set of cells, and during duplication for the radio bearer, the device 500 may cause the first LCH to use a cell amongst the subset and second LCH to use a cell amongst the second set of cells.

In an embodiment, the first logical channel is the logical channel 404 and the second logical channel is the logical channel 406. Hence, the first logical channel may be associated with primary RLC entity (or be a primary logical channel) and the second logical channel may be associated with secondary RLC entity (or be a secondary logical channel).

The radio bearer discussed with respect to Figure 6 may be, for example, the radio bearer 400.

It is noted that the steps following the activation may be performed based on configuration by the network node 104 or some other network element (e.g. configuration in step 502).

Activation of block 610 may be reactivation or simply activation in the sense that it is done for the first time or any other time after first activation and deactivation. Similar point may apply other instances where duplication activation is discussed.

In an embodiment, the method provided with reference to Figure 6 further comprises at least some of steps 602, 604.

That is, in block 602, based on configuration message from the network (e.g. similar as in block 502) the first and second logical channels may be associated with the radio bearer for duplication. The duplication may be activated in block 610 based, for example, on activation command from the network (e.g. network node 104).

In block 604 the cells restrictions for the first and logical channels may be determined based on, for example, the first and second sets of cells (e.g. indicated in block 602). In other words, block 604 may include determining cell restrictions, e.g. based on block 602 message(s), for block 612 and 614. It may further include determining cell restrictions for the first cell after the duplication for the radio bearer is deactivated. This deactivation may happen, based on a separate command from the network, e.g. after blocks 610, 612, 614.

In an embodiment, the device 500 may receive Radio Resource Control (RRC) message from the wireless communication network (e.g. from network node 104), wherein the RRC message configures the device to perform steps 612 and 614. That is, the network may indicate the rule(s) applied in blocks 612, 614 which may be performed in response to the activation of the duplication procedure for the radio bearer. The rules may indicate, for example, the first set of cells, the second sets of cells and/or the logic how the subset of the first set of cells is computed (i.e. exclude cells from first set of cells that are also found from the second set of cells). It is also possible that the logic how the subset of the first set of cells is computed is preconfigured for the device 500.

It is further noted that after blocks 612, 614 during the duplication for the radio bearer being active, the device 500 may transmit data and/or control packets according to the configured duplication. _Naturally, if the duplication is deactivated, the transmission(s) may be performed according to the inactive duplication.

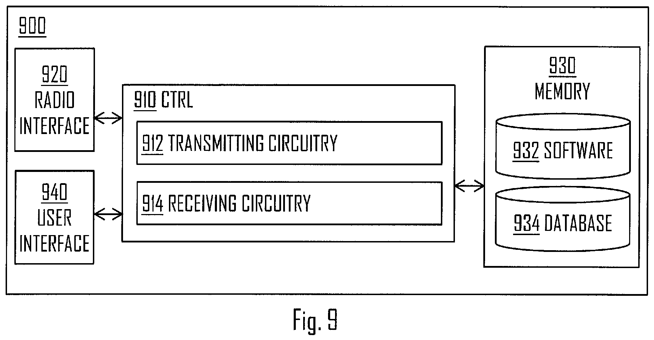

Figures 8 and 9 provide apparatuses 800, 900 comprising a control circuitry (CTRL) 810, 910, such as at least one processor, and at least one memory 830, 930 including a computer program code (software) 832, 932, wherein the at least one memory and the computer program code (software) 832, 932, are configured, with the at least one processor, to cause the respective apparatus 800, 900 to carry out any one of the embodiments described above, such as with reference to Figures 1 to 7, or operations thereof.

Referring to Figures 8 and 9 the memory 830, 930 may be implemented using any suitable data storage technology, such as semiconductor based memory devices, flash memory, magnetic memory devices and systems, optical memory devices and systems, fixed memory and removable memory. The memory 830, 930 may comprise a database 834, 934 for storing data.

The apparatus 800, 900 may further comprise radio interface (TRX) 820, 920 comprising hardware and/or software for realizing communication connectivity according to one or more communication protocols. The TRX may provide the apparatus with communication capabilities to access the radio access network and enable communication between different network entities (e.g. UEs, gNBs), for example. The TRX may comprise standard well-known components such as an amplifier, filter, frequency-converter, (de)modulator, and encoder/decoder circuitries and one or more antennas.

The apparatus 800, 900 may also comprise user interface 840, 940 comprising, for example, at least one keypad, a microphone, a touch display, a display, a speaker, etc. The user interface 840, 940 may be used to control the respective apparatus by a user of the apparatus 800, 900.

In an embodiment, the apparatus 800 may be or be comprised in the device 500. The apparatus 800 may be comprised in or be a UE such as UE 100, 102.

According to an embodiment, the CTRL 810 comprises a LCH associating circuitry 812 configured at least to perform operations described with respect to block 202; a restriction determining circuitry 814 configured at least to perform operations described with respect to block 204; a deactivation detecting circuitry 816 configured at least to perform operations described with respect to block 206; and a cell restricting circuitry 818 configured at least to perform operations described with respect to block 208.

In another embodiment, CTRL 810 is configured to perform at least some steps of the method of Figure 6.

In an embodiment, the apparatus 900 may be or be comprised in the network node 104. For example, the apparatus 900 may be a gNB or a part of the gNB, or some other network node, such as eNB or simply a base station.

According to an embodiment, the CTRL 910 comprises a transmitting circuitry 912 configured at least to perform operations described with respect to block 302; and a receiving circuitry 914 configured at least to perform operations described with respect to block 304.

In an embodiment, at least some of the functionalities of the apparatus 900 may be shared between two physically separate devices, forming one operational entity. Therefore, the apparatus 900 may be seen to depict the operational entity comprising one or more physically separate devices for executing at least some of the described processes. Thus, the apparatus 900 utilizing such shared architecture, may comprise a remote control unit (RCU), such as a host computer or a server computer, operatively coupled (e.g. via a wireless or wired network) to a remote radio head (RRH), such as a Transmission Point (TRP), located in a base station or network node, for example. In an embodiment, at least some of the described processes may be performed by the RCU. In an embodiment, the execution of at least some of the described processes may be shared among the RRH and the RCU.

In an embodiment, the RCU may generate a virtual network through which the RCU communicates with the RRH. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

Another example of split architecture may be the CU and DU split explained above. Hence, the apparatus 900 is intended to include also these split architectures in which the functionalities of the apparatus 900 are shared between more than one physical entity. It is also possible, in case the device 500 is a relay node, that some features of the apparatus 800 are shared between at least two different physical entities. That is, relay node of NR may utilize a gNB part and a mobile termination part, and particularly may be regarded as a terminal device or a UE.

According to an embodiment, there is provided a system comprising the apparatuses 800 and 900. There may be one or more of each of said apparatuses 800 and 900 in the system. In an embodiment, the system is referred to as a wireless communication system (see e.g. Figure 1). One specific example of such system is a cellular communication system.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 1 to 9 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 9 or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 9, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 9 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method performed by a user equipment (100, 102) of a wireless communication network, the method comprising:
associating (202) plurality of logical channels with a radio bearer that is configured for packet duplication;
determining (204) cell restrictions for the plurality of logical channels, the cell restrictions indicating allowable one or more cell for each of the plurality of logical channels during packet duplication for the radio bearer;
detecting (206) that the packet duplication for the radio bearer is deactivated; the method being **characterized by** comprising:
in response to the detecting, restricting (208) a remaining logical channel of the plurality of logical channels to an allowed set of cells based on the determined cell restrictions for the plurality of logical channels, wherein the allowed set of cells is a union of the cells allowed for the plurality of logical channels during the packet duplication for the radio bearer.

2. The method of claim 1, wherein the radio bearer is configured for packet duplication with carrier aggregation.

3. The method of any preceding claim, wherein each of the plurality of logical channels is restricted to a different set of one or more cell during packet duplication for the radio bearer.

4. The method of any preceding claim, wherein the restricting is initiated on the basis of a duplication deactivation message received from a network node (104).

5. The method of any preceding claim, wherein the remaining logical channel is associated with a primary radio link control entity.

6. A method performed by a network node (104) of a wireless communication network, the method comprising:
transmitting (302) a duplication deactivation message to a user equipment (100, 102) of the wireless communication network, the duplication deactivation message causing the user equipment (100, 102) to deactivate packet duplication for a radio bearer and to restrict a remaining logical channel of a plurality of logical channels to an allowed set of cells, wherein the allowed set of cells is based on cell restrictions indicating allowable one or more cell for each of the plurality of logical channels during the packet duplication and wherein the allowed set of cells is a union of the cells mapped to the plurality of logical channels that are allowed during the packet duplication for the radio bearer;
receiving (304) a transmission from the user equipment (100, 102) according to the restriction caused by the duplication deactivation message.

7. A user equipment (100, 102) of a wireless communication network, the user equipment comprising means for:
associating (202) plurality of logical channels with a radio bearer that is configured for packet duplication;
determining (204) cell restrictions for the plurality of logical channels, the cell restrictions indicating allowable one or more cell for each of the plurality of logical channels during packet duplication for the radio bearer;
detecting (206) that the packet duplication for the radio bearer is deactivated; the user equipment being **characterized by** comprising means for:
in response to the detecting, restricting (208) a remaining logical channel of the plurality of logical channels to an allowed set of cells based on the determined cell restrictions for the plurality of logical channels, wherein the allowed set of cells is a union of the cells allowed for the plurality of logical channels during the packet duplication for the radio bearer.

8. The apparatus of claim 7, wherein the radio bearer is configured for packet duplication with carrier aggregation.

9. The apparatus of any preceding claim 7 to 8, wherein the means are further configured to cause the user equipment (100, 102) to perform:
selecting (702) a subset of the allowed set of cells based on at least one criterion; and
applying (706) the subset as the allowed set of cells for the remaining logical channel.

10. The apparatus of claim 9, wherein the at least one criterion causes excluding (704) cells operating on unlicensed bands from the subset.

11. The apparatus of any preceding claim 7 to 10, wherein each of the plurality of logical channels is restricted to a different set of one or more cell during packet duplication for the radio bearer.

12. The apparatus of any preceding claim 7 to 11, wherein the restricting is initiated on the basis of a duplication deactivation message received from a network node (104).

13. The apparatus of any preceding claim 7 to 12, wherein the remaining logical channel is associated with a primary radio link control entity.

14. A network node (104) of a wireless communication network, the network node comprising means for:
transmitting (302) a duplication deactivation message to a user equipment (100, 102) of the wireless communication network, the duplication deactivation message causing the user equipment (100, 102) to deactivate packet duplication for a radio bearer and to restrict a remaining logical channel of a plurality of logical channels to an allowed set of cells, wherein the allowed set of cells is based on cell restrictions indicating allowable one or more cell for each of the plurality of logical channels during packet duplication and wherein the allowed set of cells is a union of the cells mapped to the plurality of logical channels that are allowed during the packet duplication for the radio bearer;
receiving (304) a transmission from the user equipment (100, 102) according to the restriction caused by the duplication deactivation message.

15. A computer readable medium comprising program instructions stored thereon, which, when executed by a computer, cause the computer to carry out the method of any of claims 1 to 5 or the method of claim 6.

## Patentansprüche

1. Verfahren, das von einer Teilnehmereinrichtung (100, 102) eines drahtlosen Kommunikationsnetzwerks durchgeführt wird, wobei das Verfahren Folgendes umfasst:
Verknüpfen (202) einer Vielzahl von logischen Kanälen mit einem Funkträger, der für eine Paketduplizierung ausgelegt ist;
Bestimmen (204) von Zelleneinschränkungen für die Vielzahl von logischen Kanälen, wobei die Zelleneinschränkungen eine oder mehrere zulässige Zellen für jeden der Vielzahl von logischen Kanälen während einer Paketduplizierung für den Funkträger anzeigen;
Detektieren (206), dass die Paketduplizierung für den Funkträger deaktiviert ist; wobei das Verfahren **dadurch gekennzeichnet ist, dass** es Folgendes umfasst:
in Reaktion auf das Detektieren Einschränken (208) eines verbleibenden logischen Kanals der Vielzahl von logischen Kanälen auf Basis der bestimmten Zelleneinschränkungen für die Vielzahl von logischen Kanälen auf einen zulässigen Satz von Zellen, wobei der zulässige Satz von Zellen eine Vereinigung von Zellen ist, die während der Paketduplizierung für den Funkträger für die Vielzahl von logischen Kanälen zulässig sind.

2. Verfahren nach Anspruch 1, wobei der Funkträger für eine Paketduplizierung mit Trägeraggregation ausgelegt ist.

3. Verfahren nach einem der vorhergehenden Ansprüche, wobei jeder der Vielzahl von logischen Kanälen während einer Paketduplizierung für den Funkträger auf einen anderen Satz von einer oder mehreren Zellen eingeschränkt ist.

4. Verfahren nach einem der vorhergehenden Ansprüche, wobei das Einschränken auf Basis einer Duplizierungsdeaktivierungsnachricht initiiert wird, die von einem Netzwerkknoten (104) empfangen wird.

5. Verfahren nach einem der vorhergehenden Ansprüche, wobei der verbleibende logische Kanal mit einer primären Funkverbindungssteuerentität verknüpft ist.

6. Verfahren, das von einem Netzwerkknoten (104) eines drahtlosen Kommunikationsnetzwerks durchgeführt wird, wobei das Verfahren Folgendes umfasst:
Übertragen (302) einer Duplizierungsdeaktivierungsnachricht zu einer Teilnehmereinrichtung (100, 102) des drahtlosen Kommunikationsnetzwerks, wobei die Duplizierungsdeaktivierungsnachricht die Teilnehmereinrichtung (100, 102) veranlasst, eine Paketduplizierung für einen Funkträger zu deaktivieren und einen verbleibenden logischen Kanal einer Vielzahl von logischen Kanälen auf einen zulässigen Satz von Zellen einzuschränken, wobei der zulässige Satz von Zellen auf Zelleneinschränkungen basiert, die für jeden der Vielzahl von logischen Kanälen während der Paketduplizierung eine oder mehrere zulässige Zellen anzeigen, und wobei der zulässige Satz von Zellen eine Vereinigung der Zellen ist, die der Vielzahl von logischen Kanälen zugeordnet sind, die während der Paketduplizierung für den Funkträger zulässig sind;
Empfangen (304) einer Übertragung von der Teilnehmereinrichtung (100, 102) gemäß der Einschränkung, die durch die Duplizierungsdeaktivierungsnachricht veranlasst wurde.

7. Teilnehmereinrichtung (100, 102) eines drahtlosen Kommunikationsnetzwerks, wobei die Teilnehmereinrichtung Mittel für Folgendes umfasst:
Verknüpfen (202) einer Vielzahl von logischen Kanälen mit einem Funkträger, der für eine Paketduplizierung ausgelegt ist;
Bestimmen (204) von Zelleneinschränkungen für die Vielzahl von logischen Kanälen, wobei die Zelleneinschränkungen eine oder mehrere zulässige Zellen für jeden der Vielzahl von logischen Kanälen während einer Paketduplizierung für den Funkträger anzeigen;
Detektieren (206), dass die Paketduplizierung für den Funkträger deaktiviert ist; wobei die Teilnehmereinrichtung **dadurch gekennzeichnet ist, dass** sie Mittel für Folgendes umfasst:
in Reaktion auf das Detektieren Einschränken (208) eines verbleibenden logischen Kanals der Vielzahl von logischen Kanälen auf Basis der bestimmten Zelleneinschränkungen für die Vielzahl von logischen Kanälen auf einen zulässigen Satz von Zellen, wobei der zulässige Satz von Zellen eine Vereinigung von Zellen ist, die während der Paketduplizierung für den Funkträger für die Vielzahl von logischen Kanälen zulässig sind.

8. Vorrichtung nach Anspruch 7, wobei der Funkträger für eine Paketduplizierung mit Trägeraggregation ausgelegt ist.

9. Vorrichtung nach einem der vorhergehenden Ansprüche 7 bis 8, wobei die Mittel ferner dazu ausgelegt sind, die Teilnehmereinrichtung (100, 102) zu veranlassen, Folgendes durchzuführen:
Auswählen (702) eines Untersatzes des zulässigen Satzes von Zellen auf Basis von mindestens einem Kriterium; und
Anwenden (706) des Untersatzes als den zulässigen Satz von Zellen für den verbleibenden logischen Kanal.

10. Vorrichtung nach Anspruch 9, wobei das mindestens eine Kriterium das Ausschließen (704) von Zellen, die in nicht lizenzierten Bändern betrieben werden, aus dem Untersatz veranlasst.

11. Vorrichtung nach einem der vorhergehenden Ansprüche 7 bis 10, wobei jeder der Vielzahl von logischen Kanälen während einer Paketduplizierung für den Funkträger auf einen anderen Satz von einer oder mehreren Zellen eingeschränkt ist.

12. Vorrichtung nach einem der vorhergehenden Ansprüche 7 bis 11, wobei das Einschränken auf Basis einer Duplizierungsdeaktivierungsnachricht initiiert wird, die von einem Netzwerkknoten (104) empfangen wird.

13. Vorrichtung nach einem der vorhergehenden Ansprüche 7 bis 12, wobei der verbleibende logische Kanal mit einer primären Funkverbindungssteuerentität verknüpft ist.

14. Netzwerkknoten (104) eines drahtlosen Kommunikationsnetzwerks, wobei der Netzwerkknoten Mittel für Folgendes umfasst:
Übertragen (302) einer Duplizierungsdeaktivierungsnachricht zu einer Teilnehmereinrichtung (100, 102) des drahtlosen Kommunikationsnetzwerks, wobei die Duplizierungsdeaktivierungsnachricht die Teilnehmereinrichtung (100, 102) veranlasst, eine Paketduplizierung für einen Funkträger zu deaktivieren und einen verbleibenden logischen Kanal einer Vielzahl von logischen Kanälen auf einen zulässigen Satz von Zellen einzuschränken, wobei der zulässige Satz von Zellen auf Zelleneinschränkungen basiert, die für jeden der Vielzahl von logischen Kanälen während einer Paketduplizierung eine oder mehrere zulässige Zellen anzeigen, wobei der zulässige Satz von Zellen eine Vereinigung der Zellen ist, die der Vielzahl von logischen Kanälen zugeordnet sind, die während der Paketduplizierung für den Funkträger zulässig sind;
Empfangen (304) einer Übertragung von der Teilnehmereinrichtung (100, 102) gemäß der Einschränkung, die durch die Duplizierungsdeaktivierungsnachricht veranlasst wurde.

15. Computerlesbares Medium, auf dem Programmanweisungen gespeichert sind, die, wenn sie von einem Computer ausgeführt werden, den Computer veranlassen, das Verfahren nach einem der Ansprüche 1 bis 5 oder das Verfahren nach Anspruch 6 umzusetzen.

## Revendications

1. Procédé effectué par un équipement utilisateur (100, 102) d'un réseau de communication sans fil, le procédé comprenant :
l'association (202) d'une pluralité de canaux logiques à une porteuse radio qui est configurée pour la duplication de paquets ;
la détermination (204) de restrictions de cellules pour la pluralité de canaux logiques, les restrictions de cellules indiquant une ou plusieurs cellules autorisées pour chacun de la pluralité de canaux logiques pendant la duplication de paquets pour la porteuse radio ;
la détection (206) du fait que la duplication de paquets pour la porteuse radio est désactivée ;
le procédé étant **caractérisé en ce qu'**il comprend :
en réponse à la détection, la restriction (208) d'un canal logique restant de la pluralité de canaux logiques à un ensemble de cellules autorisées, sur la base des restrictions de cellules déterminées pour la pluralité de canaux logiques, dans lequel l'ensemble de cellules autorisées est une union des cellules autorisées pour la pluralité de canaux logiques pendant la duplication de paquets pour la porteuse radio.

2. Procédé de la revendication 1, dans lequel la porteuse radio est configurée pour la duplication de paquets avec agrégation de porteuses.

3. Procédé de l'une des revendications précédentes, dans lequel chacun de la pluralité de canaux logiques est restreint à un ensemble différent d'une ou plusieurs cellules pendant la duplication de paquets pour la porteuse radio.

4. Procédé de l'une des revendications précédentes, dans lequel la restriction est initiée sur la base d'un message de désactivation de duplication reçu d'un noeud de réseau (104).

5. Procédé de l'une des revendications précédentes, dans lequel le canal logique restant est associé à une entité de commande de liaison radio primaire.

6. Procédé effectué par un noeud de réseau (104) d'un réseau de communication sans fil, le procédé comprenant :
la transmission (302) d'un message de désactivation de duplication à un équipement utilisateur (100, 102) du réseau de communication sans fil, le message de désactivation de duplication amenant l'équipement utilisateur (100, 102) à désactiver la duplication de paquets pour une porteuse radio et à restreindre un canal logique restant d'une pluralité de canaux logiques à un ensemble de cellules autorisées, dans lequel l'ensemble de cellules autorisées est basé sur des restrictions de cellules indiquant une ou plusieurs cellules autorisées pour chacun de la pluralité de canaux logiques pendant la duplication de paquets, et dans lequel l'ensemble de cellules autorisées est une union des cellules mappées à la pluralité de canaux logiques qui sont autorisées pendant la duplication de paquets pour la porteuse radio ;
la réception (304) d'une transmission de l'équipement utilisateur (100, 102) selon la restriction causée par le message de désactivation de duplication.

7. Équipement utilisateur (100, 102) d'un réseau de communication sans fil, l'équipement utilisateur comprenant des moyens pour :
associer (202) une pluralité de canaux logiques à une porteuse radio qui est configurée pour la duplication de paquets ;
déterminer (204) des restrictions de cellules pour la pluralité de canaux logiques, les restrictions de cellules indiquant une ou plusieurs cellules autorisées pour chacun de la pluralité de canaux logiques pendant la duplication de paquets pour la porteuse radio ;
détecter (206) que la duplication de paquets pour la porteuse radio est désactivée ;
l'équipement utilisateur étant **caractérisé en ce qu'**il comprend des moyens pour :
en réponse à la détection, restreindre (208) un canal logique restant de la pluralité de canaux logiques à un ensemble de cellules autorisées, sur la base des restrictions de cellules déterminées pour la pluralité de canaux logiques, dans lequel l'ensemble de cellules autorisées est une union des cellules autorisées pour la pluralité de canaux logiques pendant la duplication de paquets pour la porteuse radio.

8. Appareil de la revendication 7, dans lequel la porteuse radio est configurée pour la duplication de paquets avec agrégation de porteuses.

9. Appareil de l'une des revendications précédentes 7 et 8, dans lequel les moyens sont en outre configurés pour amener l'équipement utilisateur (100,102) à effectuer :
la sélection (702) d'un sous-ensemble de l'ensemble de cellules autorisées sur la base d'au moins un critère ; et
l'application (706) du sous-ensemble en tant qu'ensemble de cellules autorisées pour le canal logique restant.

10. Appareil de la revendication 9, dans lequel l'au moins un critère entraîne l'exclusion (704) de cellules fonctionnant sur des bandes sans licence du sous-ensemble.

11. Appareil de l'une des revendications précédentes 7 à 10, dans lequel chacun de la pluralité de canaux logiques est restreint à un ensemble différent d'une ou plusieurs cellules pendant la duplication de paquets pour la porteuse radio.

12. Appareil de l'une des revendications précédentes 7 à 11, dans lequel la restriction est initiée sur la base d'un message de désactivation de duplication reçu d'un noeud de réseau (104).

13. Appareil de l'une des revendications précédentes 7 à 12, dans lequel le canal logique restant est associé à une entité de commande de liaison radio primaire.

14. Noeud de réseau (104) d'un réseau de communication sans fil, le noeud de réseau comprenant des moyens pour :
transmettre (302) un message de désactivation de duplication à un équipement utilisateur (100, 102) du réseau de communication sans fil, le message de désactivation de duplication amenant l'équipement utilisateur (100, 102) à désactiver la duplication de paquets pour une porteuse radio et à restreindre un canal logique restant d'une pluralité de canaux logiques à un ensemble de cellules autorisées, dans lequel l'ensemble de cellules autorisées est basé sur des restrictions de cellules indiquant une ou plusieurs cellules autorisées pour chacun de la pluralité de canaux logiques pendant la duplication de paquets, et dans lequel l'ensemble de cellules autorisées est une union des cellules mappées à la pluralité de canaux logiques qui sont autorisées pendant la duplication de paquets pour la porteuse radio ;
recevoir (304) une transmission de l'équipement utilisateur (100, 102) selon la restriction causée par le message de désactivation de duplication.

15. Support lisible par ordinateur comprenant des instructions de programme stockées sur celui-ci qui, lorsqu'elles sont exécutées par un ordinateur, amènent l'ordinateur à mettre en œuvre le procédé de l'une des revendications 1 à 5 ou le procédé de la revendication 6.
